# EUROPEAN PATENT SPECIFICATION

(11) **EP 2 176 335 B1**
(45) Date of publication and mention of the grant of the patent: **26.03.2014**
(21) Application number: 07860785.0
(22) Date of filing: 31.12.2007
(51) Int. Cl.: C08K 7/02, C08K 3/04, C08K 7/06, C08L 69/00

(54) **ELECTRO-CONDUCTIVE THERMOPLASTIC RESIN COMPOSITIONS AND ARTICLES MANUFACTURED THEREFROM**
ELEKTRISCH LEITFÄHIGE THERMOPLASTHARZZUSAMMENSETZUNGEN UND DARAUS HERGESTELLTE GEGENSTÄNDE
COMPOSITION DE RESINE THERMOPLASTIQUE ELECTRO-CONDUCTRICE ET ARTICLES FABRIQUES A PARTIR DE CETTE COMPOSITION

(30) Priority: 08.08.2007 KR 20070079608
(43) Date of publication of application: 21.04.2010
(73) Proprietor: Cheil Industries INC., Gumi-si 730-710 (KR)
(72) Inventor: CHANG, Young Kyu, Gyeonggi-do (KR); KIM, Sang Wan, Gyeonggi-do (KR); LEE, Young Sil, Gyeonggi-do (KR)
(74) Representative: Bublak, Wolfgang
(86) International application number: PCT/KR2007/007008
(87) International publication number: WO 2009/020261

(56) References cited:
- EP-A1- 2 166 038
- JP-A- 2006 083 195
- JP-A- 2007 154 100
- KR-A- 20060 052 657
- KR-A- 20060 120 023
- KR-B1- 100 706 651
- US-A1- 2006 089 434
- US-B2- 6 746 627

## Description

### [Technical Field]

The present invention relates to an electro-conductive thermoplastic resin composition with controllable superior electro-conductivity and excellent impact resistance.

### [Background Art]

Thermoplastic resins are divided into general-purpose plastics such as polyethylene, polypropylene, acrylic, styrene and vinyl resins and engineering plastics such as polycarbonate, polyphenylene ether, polyamide, polyester and polyimide resins.

Because of their superior processability and moldability, thermoplastic resins are widely utilized in applications including various household supplies, office automation equipment and electrical/electronic products. Depending on the kind and characteristics of products employing a thermoplastic resin, there have been ongoing attempts to use the thermoplastic resin as a high value-added material by imparting specific properties as well as superior processability and moldability to the thermoplastic resin. Regarding specific properties, there have been various attempts to impart electro-conductivity to the thermoplastic resin and utilize the electro-conductive thermoplastic resin so that automobiles, electric apparatuses, and electronic assemblies or cables can exhibit electromagnetic shielding property.

The electro-conductive thermoplastic resin is generally prepared by mixing a thermoplastic resin with a conductive additive such as a carbon black, a carbon fiber, a metal powder, a metal-coated inorganic powder or a metal fiber. In order to secure a desired level of electrical conductivity, the conductive additive must be used in a considerably large amount (10% by weight or more). However, the use of the conductive additive in the considerably large amount disadvantageously causes a considerable deterioration in basic physical properties including mechanical physical properties e.g. impact resistance, of the electro-conductive thermoplastic resin.

Accordingly, there has been an attempt to impart superior electrical conductivity to the thermoplastic resin by using a small amount of carbon nanotubes as the conductive additive.

However, when an electro-conductive thermoplastic resin is prepared by mixing a thermoplastic resin with carbon nanotubes and injecting the mixture in an injector, the carbon nanotubes show mobility and orientation due to shearing stress generated during the injection. As a result, the bonding between carbon nanotubes present in the electro-conductive thermoplastic resin is severed and the electrical conductivity of the electro-conductive thermoplastic resin is thus deteriorated.
A flame-retardant polycarbonate resin with carbon nanotubes is disclosed in EP 2 166 038 A1. An aromatic polycarbonate resin composition containing a polyolefine system resin and a carbon nanotube is described in JP 2006 083195 A1. An electroconductive composition comprising thermoplastic resin, a carbon nanotube and silicon oil is disclosed in JP 2007 154100 A1.

### [Technical Problem]

The present invention has been made to solve the foregoing problems of the prior art and it is one aspect of the present invention to provide an electro-conductive thermoplastic resin composition with controllable superior electro-conductivity as well as excellent impact resistance.

It is another aspect of the present invention to provide an article manufactured from the electro-conductive thermoplastic resin composition.

Aspects of the present invention are not limited to the aforementioned aspects and those skilled in the art will clearly appreciate other aspects from the following detailed description.

### [Technical Solution]

In accordance with one aspect of the present invention, there is provided an electro-conductive thermoplastic resin composition as defined in claim 1.

In accordance with another aspect of the present invention, there is provided an article as defined in claim 7 manufactured from the electro-conductive thermoplastic resin composition.

Basically, the electro-conductive thermoplastic resin composition of the present invention comprises a base resin where carbon nanotubes are dispersed in a thermoplastic resin, an impact modifier and a hydrophobic polymer additive.

During injection of the electro-conductive thermoplastic resin composition, the hydrophobic polymer additive prevents the carbon nanotubes from being oriented or moved in the resin, thus avoiding severance of the carbon nanotubes. Thus, with the electro-conductive thermoplastic resin composition of the present invention, it is possible to realize an electro-conductive thermoplastic resin composition with more improved electrical conductivity.

In addition, owing to a rubber-based impact modifier contained in the electro-conductive thermoplastic resin composition, it is possible to prevent deterioration of basic physical properties (including mechanical physical properties *e.g*. impact resistance) of the electro-conductive thermoplastic resin which results from the addition of the carbon nanotubes.

Thus, according to the present invention, it is possible to realize an electro-conductive thermoplastic resin with superior physical properties, *e.g*. impact resistance and abrasion resistance, as well as more improved electrical conductivity.

Respective ingredients of the electro-conductive thermoplastic resin composition will be described in detail. In the following description of the present invention, the same constituent components are denoted by the same reference numerals.

### (A) Thermoplastic resin

The electro-conductive thermoplastic resin composition of the present invention comprises 80 to 99.7 parts by weight of a thermoplastic resin, based on a total of 100 parts by weight of the electro-conductive thermoplastic resin composition. Within the range of the thermoplastic resin content as defined above, the balance of the physical properties such as impact resistance and electro-conductivity can be maintained.

The thermoplastic resin may be used singly or as a copolymer or mixture thereof.

Depending on the physical properties of the thermoplastic resin composition or the type of products employing the resin composition, the thermoplastic resin includes polyamide, polyester (*e.g*. polyethylene terephthalate or polybutylene terephthalate) and polycarbonate resins.

Hereinafter, polyester and polycarbonate resins suitable for use as the thermoplastic resin will be illustrated in detail.

The polyester resin may be also used as the thermoplastic resin. The polyester resin may contain an ester linkage in a polymer chain and be melted by heating. For example, the polyester resin useful for the present invention may be prepared by polycondensation of dicarboxylic acid and a dihydroxy compound. There is no limitation as to the preparation method of the polyester resin. Accordingly, the polyester resin may be prepared by other commonly known methods. In addition, there is no limitation as to the type of the polyester resin. That is, the polyester resin may be a homopolyester or copolyester resin. Examples of suitable polyester resins include aromatic polyester such as polyethylene terephthalate (PET), polybutylene terephthalate (PBT), polycyclohexaneterephthalate or polyethylenenaphthalate, and aromatic copolyester such as poly(ethylene-1,4-cyclohexanedimethylene terephthalate) or glycol-modified polyethylene terephthalate.

The polycarbonate resin may be used as the thermoplastic resin. For example, the polycarbonate resin may include an aromatic polycarbonate resin prepared by reacting phosgene, halogen formate or diester carbonate with a diphenol compound represented by Formula I below: 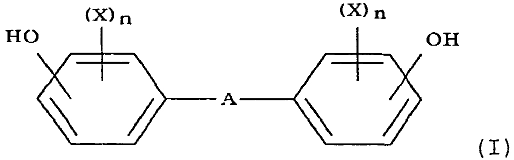 wherein A is a single bond, C₁-C₅ alkylene, C₁-C₅ alkylidene, C₅-C₆ cycloalkylidene, -S- or -SO₂-; X is a halogen; and n is 0, 1 or 2.

The diphenol compound in Formula 1 may be 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, or 2,2-bis-(3,5-dichloro-4-hydroxyphenyl)-propane. Of these, preferred are 2,2-bis-(4-hydroxyphenyl)-propane, 2,2-bis-(3,5-dichloro-4-hydroxyphenyl)-propane and 1,1-bis-(4-hydroxyphenyl)-cyclohexane. More preferred is 2,2-bis-(4-hydroxyphenyl)-propane, also called "bisphenol-A (BPA)".

The polycarbonate resin may have a weight average molecular weight of 15,000 to 50,000 g/mol.

There is no limitation as to the type of the polycarbonate resin. That is, the polycarbonate resin may be a linear or branched polycarbonate resin, or a polyester-carbonate copolymer resin. The branched polycarbonate resin may be prepared from the diphenol compound and 0.05 to 2 mol% of a tri- or polyfunctional (i.e. polyfunctional) compound such as a tri- or polyfunctional phenol compound, based on a total mole of the diphenol compound.

The polyester-carbonate copolymer resin may be prepared by polymerization in the presence of an ester precursor e.g. dicarboxylic acid. The polyester-carbonate copolymer resin may be used singly or in combination with a polycarbonate resin.

There is no limitation as to the type of the polycarbonate resin. That is, the polycarbonate resin may be a homopolycarbonate resin, a copolycarbonate resin or a combination thereof.

The specific composition and preparation method of these thermoplastic resins are well-known to those skilled in the art.

### (B) Carbon nanotube

The electro-conductive thermoplastic resin composition further comprises 0.1 to 5 parts by weight of a carbon nanotube, based on a total of 100 parts by weight of the electro-conductive thermoplastic resin composition. When the carbon nanotube is used in an amount lower than 0.1 parts by weight, it is difficult to realize desirable electro-conductivity. When the carbon nanotube is used in an amount exceeding 5 parts by weight, impact resistance may be deteriorated.

The carbon nanotube exhibits superior mechanical properties such as a high mechanical strength, a high Young's modulus and a large aspect ratio, high electro-conductivity and superior thermal stability. Accordingly, by applying such a carbon nanotube to a polymeric composite, it is possible to prepare a carbon nanotube-polymer composite with improved mechanical, thermal and electrical properties.

There are a variety of methods for synthesizing carbon nanotubes and examples thereof include arc-discharge, pyrolysis, laser ablation, plasma enhanced chemical vapor deposition (PECVD), thermal chemical vapor deposition and electrolysis. The carbon nanotube may be synthesized by any method.

Carbon nanotubes are divided into single-walled carbon nanotubes, double-walled carbon nanotubes and multi-walled carbon nanotubes, based on the wall number thereof. There is no particular limitation as to the type of carbon nanotubes. Preferred is the use of multi-walled carbon nanotubes.

There is no particular limitation as to the size of the carbon nanotube. The carbon nanotube may have a diameter of 0.5 to 100 nm, preferably 1 to 10 nm, and a length of 0.01 to 100 µm, preferably 0.5 to 10 µm. A carbon nanotube having a diameter and length within these ranges can exhibit superior electro-conductivity and processability.

Owing to the size within the range as defined above, the carbon nanotube can have an aspect ratio (L/D). Depending on the improvement in electro-conductivity, it is preferable to use a carbon nanotube that has an aspect ratio of 100 to 1,000.

### (c) Impact modifier

The addition of a carbon nanotube to a polymeric resin causes a deterioration in impact strength. This deterioration can be offset by using an impact modifier.

The content of the impact modifier used for the electro-conductive thermoplastic resin composition is preferably 0.1 to 5 parts by weight, based on a total of 100 parts by weight of the thermoplastic resin composition and the range of the content may be preferably determined based on various factors *e.g*. impact reinforcement, inhibitory activity of orientation and mobility, and mechanical strength such as tensile strength, flexural strength or flexural modulus.

Specifically, the impact modifier useful for the present invention is a core-shell copolymer.

The core-shell copolymer has a core-shell structure prepared by graft polymerizing one or more monomers onto the surface of a rubber core. The monomer is selected from unsaturated compounds and examples thereof include styrene, α-methylstyrene, halogen- or C₁-C₈ alkyl-substituted styrene, acrylonitrile, methacrylonitrile, C₁-C₈ methacrylic acid alkyl ester, C₁-C₈ acrylic acid alkyl ester, maleic acid anhydride, C₁-C₄ alkyl or phenyl N-substituted maleimide and a combination thereof. The rubber core is prepared by polymerizing monomers selected from the group consisting of C₄-C₆ diene, acrylate and a combination thereof. Because of the structure in which vinyl monomers are grafted onto the rubber core, the core-shell copolymer is in the form of a hard shell.

Preferably, the core-shell graft copolymer consists of 20 to 90% by weight of the rubber core and 10 to 80% by weight of the shell. As a result, the mechanical physical properties (*e.g*. impact resistance) of the electro-conductive thermoplastic resin can be efficiently improved.

Examples of the diene rubber that can be used as the rubber core in the core-shell structure include butadiene, acrylic, ethylene-propylene, styrene-butadiene, acrylonitrile-butadiene and isoprene rubbers, and ethylene-propylene-diene (EPDM) terpolymer rubbers. The acrylate rubber that can be used as the rubber core may be polymerized with acrylate monomers selected from methyl acrylate, ethyl acrylate, n-propyl acrylate, n-butyl acrylate, 2-ethylhexyl acrylate, hexyl methacrylate and 2-ethylhexyl methacrylate monomers and a combination thereof. A hardener used in the polymerization may be ethylene glycol dimethacrylate, propylene glycol dimethacrylate; 1,3-butylene glycol dimethacrylate, 1,4-butylene glycol dimethacrylate, allyl methacrylate or triallyl cyanurate.

The method for grafting the reactive functional group onto the olefin copolymer is well-known to those skilled in the art.

### (D) Hydrophobic polymer additive

The hydrophobic polymer additive that can be used in the present invention may be a fluorinated polyolefin resin or a low-molecular weight polyolefin.

The hydrophobic polymer additive may be used alone or in a combination thereof. The hydrophobic polymer additive is preferably used in an amount of 0.1 to 10 parts by weight, more preferably 0.1 to 5 parts by weight, based on a total of 100 parts by weight of the thermoplastic resin composition. When the content of the hydrophobic polymer additive is lower than 0.1 parts by weight, it is impossible to improve electro-conductivity to a desired level. When the content exceeds 10 parts by weight, deterioration in physical properties due to phase-separation or isolation may occur.

Hereinafter, a detailed description of the fluorinated polyolefin and low-molecular weight polyolefin will be given.

### (a) Fluorinated polyolefin resin

The fluorinated polyolefin resin that can be used to prepare the electro-conductive thermoplastic resin composition of the present invention may be a conventionally available resin and examples thereof include polytetrafluoroethylene, polyvinylidenefluoride, tetrafluoroethylene/vinylidenefluoride copolymers, tetrafluoroethylene/hexafluoropropylene copolymers, and ethylene/tetrafluoroethylene copolymers. The resin may be used singly or in combination thereof.

When the fluorinated polyolefin resin is mixed and extruded with the other resin ingredients, it moves into the surface of the resin composition together with strongly hydrophobic carbon nanotubes, thereby serving to exhibit electro-conductivity. The fluorinated polyolefin resin can be prepared by known polymerization processes. For example, the fluorinated polyolefin resin is prepared in an aqueous medium under a pressure of 7-71 kg/cm² at a temperature of 0 to 200°C, preferably 20 to 100°C in the presence of a free radical-forming catalyst, *e.g*., sodium, potassium or ammonium peroxydisulfate.

In the preparation of the electro-conductive thermoplastic resin, the fluorinated polyolefin resin may be used in an emulsion or powder state. When the fluorinated polyolefin resin is used in an emulsion state, it is uniformly dispersed in the resin composition. However, the preparation of the fluorinated polyolefin resin in an emulsion state is complicated. Accordingly, it is preferred that the fluorinated polyolefin resin be used in an emulsion state so long as it can be suitably dispersed in the resin composition.

Most preferred is the use of polytetrafluoroethylene that has an average particle size of 0.05 to 1,000 µm and a density of 1.2 to 2.3 g/cm³ as the fluorinated polyolefin resin.

### Low-molecular weight polyolefin

The low-molecular weight polyolefin has a number-average molecular weight of 1,000 to 50,000 g/mol. The low-molecular weight polyolefin is prepared by polymerizing one or more olefin monomers selected from ethylene, propylene, isopropylene, butylene, isobutylene and a combination thereof, or degrading high-molecular weight polyolefin. When the polyolefin has a number-average molecular weight exceeding 50,000 g/mol, it decreases in the ability to migrate onto the surface of the resin composition, thus making it difficult to improve electro-conductivity. Depending on the improvement in electro-conductivity, it is preferable to use polyolefin that has a number-average molecular weight of 2,000 to 20,000 g/mol.

The low-molecular weight polyolefin may be prepared using a general olefin polymerization catalyst, i.e. a Ziegler-Natta catalyst. To form a more selective structure, a metallocene catalyst may be used to prepare the polyolefin. In addition, the low-molecular weight polyolefin may be prepared by thermally- or chemically degrading high-molecular weight polyolefin such as high-density polyethylene, low-density polyethylene or polypropylene.

Furthermore, in order to improve dispersibility of polyolefin with other resins, a functional group such as maleic anhydride is grafted on the polyolefin. Alternatively, a graft copolymer-type modified olefin may be prepared which consists of the polyolefin as a backbone and other resin e.g. polystyrene as a chain.

Meanwhile, the electro-conductive thermoplastic resin composition of the present invention further comprises one or more additives depending on its applications.

Specifically, in order to improve physical properties *e.g*. mechanical strength and heat deflection temperature, the electro-conductive thermoplastic resin composition may further comprise an inorganic filler such as a glass fiber, a carbon fiber, talc, silica, mica or alumina.

Furthermore, the electro-conductive thermoplastic resin composition may further comprise UV stabilizers, heat stabilizers, antioxidants, flame retardants, lubricants and pigments and/or dyes.

The additive may be preferably used in an amount of 0.1 to 30 parts by weight, based on 100 parts of the resin composition.

The electro-conductive thermoplastic resin composition according to the present invention may be prepared by mixing the thermoplastic resin, the carbon nanotube, the impact modifier and the hydrophobic polymer additive in accordance with a well-known method. For example, the electro-conductive thermoplastic resin composition may be prepared by simultaneously mixing constituent components of the resin composition with other additives, melt-extruding the mixture in an extruder, and pelletizing the extrudate.

In another aspect, the present invention is directed to an article manufactured from the electro-conductive thermoplastic resin composition.

The composition of the present invention is useful for molding a variety of products. In particular, the composition is suitable for the production of electrical and electronic products that require superior electro-conductivity and mechanical properties when injected at a high temperature.

Such an article, for example, may comprise: a thermoplastic resin matrix; and a carbon nanotube, an impact modifier and a hydrophobic polymer additive, each being dispersed in the thermoplastic resin matrix. According to the article, the impact modifier dispersed in the thermoplastic resin can inhibit the deterioration in mechanical physical properties (*e.g*., impact resistance) which results from the inclusion of the carbon nanotube, and the addition of the hydrophobic polymer additive enables improvement in electro-conductivity.

Accordingly, since the article manufactured from the electro-conductive thermoplastic resin composition imparts electro-conductivity to automobiles, electric apparatuses, and electronic assemblies or cables, it may be suitably utilized in a variety of applications including *e.g*. antistatic and electrostatic discharge.

### [Advantageous Effects]

As apparent from the above description, according to the present invention, an electro-conductive thermoplastic resin composition with controllable superior electro-conductivity and excellent impact resistance is provided. Since the electro-conductive thermoplastic resin composition imparts electro-conductivity to automobiles, electric apparatuses, and electronic assemblies or cables, it may be suitably utilized in a variety of applications including antistatic and electrostatic discharge.

### [Mode for Invention]

Hereinafter, the fact that the electro-conductive thermoplastic resin composition according to preferred embodiments of the present invention exhibits good electro-conductivity and impact resistance will be illustrated with reference to the following specific Examples. Although not mentioned herein, a greater detail thereof will be appreciated by those skilled in the art.

The specification of (A) a polycarbonate resin, (B) a carbon nanotube, (C) an impact modifier and (D) a hydrophobic polymer additive used in the following Examples and Comparative Examples is given below:
(A) Polycarbonate resin
   Bisphenol-A polycarbonate (weight average molecular weight (Mw): 25,000 g/mol) was used as a polycarbonate resin.
(B) Carbon nanotube
   A multi-walled carbon nanotube (C-tube 100^{®} available from CNT Co., LTD., diameter: 10-50 nm, length: 1-25 µm) was used as the carbon nanotube.
(C) Impact modifier
   A methyl methacrylate-butadiene ethyl acrylate copolymer (EXL 2062 available from Kureha Chemical Industry. Co., Ltd.) was used as the impact modifier.
(D) Hydrophobic polymer additive
   a) Fluorinated polyolefin resin
      A TF 9205 PTFE powder (available from Dyneon, Inc., average diameter: 8 µm, bulk density; 400 g/l) was used.
   b) Low-molecular weight polyolefin
      An L-C 104N low-molecular weight polyethylene wax (available from Lion Chemtech Co., Ltd.) was used.

### EXAMPLES 1 TO 9

Electro-conductive thermoplastic resin compositions of Examples 1 to 12 were prepared from the aforementioned constituent components in accordance with the contents shown in Tables 1 and 2. At this time, a general heat stabilizer was added in an amount of 0.3 parts by weight. The physical and electrical properties of the electro-conductive thermoplastic resin compositions of Examples 1 to 12 are shown in Tables 1 and 2.

### COMPARATIVE EXAMPLES 1 AND 2

Electro-conductive thermoplastic resin compositions of Comparative Examples 1 and 2 were prepared in the same manner as in Examples 1 to 9 except that neither carbon nanotube nor hydrophobic polymer additive was added. Compositions and physical/electrical properties in Comparative Examples are shown in Table 1 below. At this time, a general heat stabilizer was added in an amount of 0.3 parts by weight.

**TABLE 1**

| | | Examples | | | | | Comparative Examples | |
|---|---|---|---|---|---|---|---|---|
| | | **1** | **2** | **3** | **4** | **5** | **1** | **2** |
| (A) Thermoplastic resin (wt. parts) | | 94.2 | 93.7 | 93.2 | 92.7 | 92.7 | 96.7 | 93.7 |
| (B) Carbon nanotube (wt. parts) | | 1.5 | 2 | 2.5 | 3 | 3 | 3 | 3 |
| (C) Impact modifier (wt. Parts) | | 3 | 3 | 3 | 3 | 3 | - | 3 |
| (D) Hydrophobic polymer additive (wt. parts) | (a) | 1 | 1 | 1 | 1 | 0.5 | - | - |
| | | - | - | - | - | - | - | - |
| | (b) | - | - | - | - | 0.5 | - | - |
| IZOD impact strength (kgf· cm/cm) | | 68 | 68 | 67 | 63 | 65 | 12 | 68 |
| Surface resistance (Ω/sq) | | 10⁹ | 10⁸ | 10⁶ | 10⁶ | 10⁷ | 10¹⁵ | 10¹⁵ |

**TABLE 2**

| | | Examples | | | |
|---|---|---|---|---|---|
| | | **6** | **7** | **8** | **9** |
| (A) Thermoplastic resin (wt. parts) | | 92.7 | 90.7 | 90.7 | 88.7 |
| (B) Carbon nanotube (wt. parts) | | 3 | 3 | 3 | 3 |
| (C) Impact modifier (wt. parts) | | 3 | 3 | 3 | 3 |
| (D) Hydrophobic | (a) | 2 | 3 | - | - |
| polymer additive (wt. parts) | | - | - | - | - |
| | (b) | - | - | 3 | 5 |
| IZOD impact strength (kgf· cm/cm) | | 61 | 59 | 60 | 61 |
| Surface resistance (Ω/sq) | | 10⁶ | 10⁶ | 10⁷ | 10⁷ |

Respective ingredients were added in accordance with contents shown in Tables 1 and 2 and then mixed in a mixer generally used to mix polymeric ingredients. The mixture was put in a double-screw extruder (L/D=36, Φ=45 mm). Resin compositions were pelletized from the mixture. The pellets were molded into test specimens of 10 cm x 10 cm for measurement of physical properties and evaluation of electrical conductivity using an injection machine with a maximum injection weight of 10 oz at an injection temperature of 300°C.

The impact resistance of each test specimen was measured by IZOD impact strength testing (kgf · cm/cm, ASTM D256, 1/8") which is generally used to test impact strength of polymeric composites. The electrical conductivity (surface resistance) was measured with a 4-probe technique as a commonly used method. The results are shown in Tables 1 and 2.

It can be seen from the results that in a case where a resin composition uses the polycarbonate resin (A) and the carbon nanotube (B) only, the resin composition exhibits no electrical conductivity after the injection (Comparative Example 1), and in a case where a resin composition comprises the polycarbonate resin (A), the carbon nanotube (B) and the impact modifier (C), but comprises no hydrophobic polymer additive (D), the resin composition exhibits no electrical conductivity (Comparative Example 2).

On the other hand, it can be confirmed from the results that in a case where resin compositions of the Examples comprise all of the polycarbonate resin (A), the carbon nanotube (B), the impact modifier (C) and the hydrophobic polymer additive (D), the resin compositions exhibit sufficient electrical conductivity and can show conductivity after injection even using a small amount of the hydrophobic polymer additive (D) without causing damage to mechanical properties e.g. impact strength.

This is because the hydrophobic polymer additive is linked to the carbon nanotube and thus mediates migration of the carbon nanotube onto the surface of the resin composition when the carbon nanotube is dispersed and injected, thereby contributing to improvement in electro-conductivity.

In particular, it can be seen from the results of Examples 6 to 9 that a resin composition which uses a fluorine-based polymer, Teflon, as the hydrophobic polymer additive exhibits conductivity even using a small amount of the fluorine-based polymer, as compared to a resin composition which uses a polyethylene wax . When the polyethylene wax was used in an excessive amount, it is poorly compatible with most thermoplastic resins and may be separated from the surface of the thermoplastic resins.

In the case of Example 5 resin compositions which use a fluorine-based polymer in conjunction with the polyethylene wax shows superior surface conductivity.

The aforementioned-results ascertain that the electro-conductive thermoplastic resin composition according to Examples of the present invention may be utilized in a variety of applications including antistatic and electromagnetic shielding.

Although the preferred embodiments of the present invention have been disclosed with reference to the accompanying Tables for illustrative purposes, those skilled in the art will appreciate that various modifications, additions and substitutions are possible, without departing from the scope and spirit of the invention as disclosed in the accompanying claims.

## Claims

1. An electro-conductive thermoplastic resin composition comprising:
80 to 99.7 parts by weight of a thermoplastic resin, wherein the thermoplastic resin is selected from the group consisting of a polyamide resin, a polyester resin, a polycarbonate resin and a combination thereof;
0.1 to 5 parts by weight of a carbon nanotube;
0.1 to 5 parts by weight of an impact modifier,
wherein the impact modifier is a core-shell polymer and wherein the core-shell polymer has a core-shell structure prepared by graft polymerizing one or more monomers onto a rubber core, wherein the monomer is an unsaturated compound selected from the group consisting of styrene, α-methylstyrene, halogen- or C1-C8 alkyl-substituted styrene, acrylonitrile, methacrylonitrile, C1-C8 methacrylic acid alkyl ester, C1-C8 acrylic acid alkyl ester, maleic acid anhydride, C1-C4 alkyl or phenyl N-substituted maleimide, or a combination thereof and the rubber core polymerised with one or more monomers selected from the group consisting of C₄-C₆ diene, acrylate and a combination thereof; and
0.1 to 10 parts by weight of a hydrophobic polymer additive, based on a total of 100 parts by weight of the electro-conductive thermoplastic resin composition,
wherein the hydrophobic polymer additive is selected from the group consisting of a fluorinated polyolefin resin, a polyolefin having a number average molecular weight of 1 000 to 50 000 g/mol polymerised with one or more monomers selected from ethylene, propylene, isopropylene, butylene, isobutylene and a combination thereof, and a combination thereof.

2. The electro-conductive thermoplastic resin composition according to claim 1, wherein the carbon nanotube has a diameter of 0.5 to 100 nm and a length of 0.01 to 100 µm.

3. The electro-conductive thermoplastic resin composition according to claim 2, wherein the acrylate rubber is polymerized with acrylate monomers selected from the group consisting of methyl acrylate, ethyl acrylate, n-propyl acrylate, n-butyl acrylate, 2-ethylhexyl acrylate, hexyl methacrylate, 2-ethylhexyl methacrylate and a combination thereof.

4. The electro-conductive thermoplastic resin composition according to claim 1, wherein the fluorinated polyolefin resin is selected from the group consisting of polytetrafluoroethylene, polyvinylidenefluoride, a tetrafluoroethylene/vinylidenefluoride copolymer, a tetrafluoroethylene/hexafluoropropylene copolymer, an ethylene/tetrafluoroethylene copolymer and a combination thereof.

5. The electro-conductive thermoplastic resin composition comprising according to claim 1, wherein the polyolefin having a number average molecular weight of 1 000 to 50 000 g/mol is at least one olefin copolymer selected from ethylene, propylene, isopropylene, butylene, isobutylene and a combination thereof.

6. The electro-conductive thermoplastic resin composition according to claim 1, further comprising one or more additives selected from a glass fiber, a carbon fiber, talc, silica, mica, alumina, a UV stabilizer, a heat stabilizer, an antioxidant, a flame retardant, a lubricant, a pigment and a dye.

7. A plastic article manufactured from the electro-conductive thermoplastic resin composition according to claim 1.

## Patentansprüche

1. Elektrisch leitende thermoplastische Harzzusammensetzung, umfassend:
80 bis 99,7 Gewichtsteile eines thermoplastischen Harzes, wobei das thermoplastische harz ausgewählt ist aus der Gruppe, bestehend aus einem Polyamidharz, einem Polyesterharz, einem Polycarbonatharz und einer Kombination davon;
0,1 bis 5 Gewichtsteile eines Kohlenstoffnanoröhrchens;
0,1 bis 5 Gewichtsteile eines Schlagmodifikators,
wobei der Schlagmodifikator ein Kern-Schale-Polymer ist und wobei das Kem-Schale-Polymer eine Kern-Schale-Struktur aufweist, die durch Pfropfpolymerisieren von einem oder mehreren Monomer/en auf einen Kautschukkern hergestellt ist, wobei das Monomer eine ungesättigte Verbindung ist, die ausgewählt ist aus der Gruppe, bestehend aus Styrol, α-Methylstyrol, halogen- oder C1-C8-alkylsubstituiertem Styrol, Acrylnitril, Methacrylnitril, C1-C8-Methacrylsäurealkylester, C1-C8-Acrylsäurealkylester, Maleinsäureanhydrid, C1-C4-alkyl- oder phenyl-N-substituiertem Maleimid oder einer Kombination davon, und der Kautschukkern mit einem oder mehreren Monomer/en polymerisiert ist, das/die ausgewählt ist/sind aus der Gruppe, bestehend aus C₄-C₆-Dien, Acrylat und einer Kombination davon;
und
0,1 bis 10 Gewichtsteile eines hydrophoben Polymerzusatzstoffs auf der Basis von insgesamt 100 Gewichtsteilen der elektrisch leitenden thermoplastischen Harzzusammensetzung,
wobei der hydrophobe Polymerzusatzstoff ausgewählt ist aus der Gruppe, bestehend aus einem fluorierten Polyolefinharz, einem Polyolefin mit einem Zahlenmittel des Molekulargewichts von 1000 bis 50000 g/mol, polymerisiert mit einem oder mehreren Monomer/en, das/die ausgewählt ist/sind aus der Gruppe, bestehend aus Ethylen, Propylen, Isopropylen, Butylen, Isobutylen und einer Kombination davon, und einer Kombination davon.

2. Elektrisch leitende thermoplastische Harzzusammensetzung nach Anspruch 1, wobei das Kohlenstoffnanoröhrchen einen Durchmesser von 0,5 bis 100 nm und eine Länge von 0,01 bis 100 µm aufweist.

3. Elektrisch leitende thermoplastische Harzzusammensetzung nach Anspruch 2, wobei der Acrylatkautschuk mit Acrylatmonomeren polymerisiert ist, die ausgewählt sind aus der Gruppe, bestehend aus Methylacrylat, Ethylacrylat, n-Propylacrylat, n-Butylacrylat, 2-Ethylhexylacrylat, Hexylmethacrylat, 2-Ethylhexylmethacrylat und einer Kombination davon.

4. Elektrisch leitende thermoplastische Harzzusammensetzung nach Anspruch 1, wobei das fluorierte Polyolefinharz ausgewählt ist aus der Gruppe, bestehend aus Polytetrafluorethylen, Polyvinylidenfluorid, einem Tetrafluorethylen/Vinylidenfluorid-Copolymer, einem Tetrafluorethylen/Hexafluorpropylen-Copolymer, einem Ethylen/Tetrafluorethylen-Copolymer und einer Kombination davon.

5. Elektrisch leitende thermoplastische Harzzusammensetzung nach Anspruch 1, wobei das Polyolefin mit einem Zahlenmittel des Molekulargewichts von 1000 bis 50000 g/mol mindestens ein Olefincopolymer ist, das ausgewählt ist aus Ethylen, Propylen, Isopropylen, Butylen, Isobutylen und einer Kombination davon.

6. Elektrisch leitende thermoplastische Harzzusammensetzung nach Anspruch 1, des Weiteren umfassend einen oder mehrere Zusatzstoff/e, der/die ausgewählt ist/sind aus einer Glasfaser, einer Kohlenstofffaser, Talkum, Silica, Glimmer, Aluminiumoxid, einem UV-Stabilisator, einem Wärmestabilisator, einem Antioxidationsmittel, einem Flammhemmer, einem Schmiermittel, einem Pigment und einem Farbstoff.

7. Kunststoffgegenstand, der aus der elektrisch leitenden thermoplastischen Harzzusammensetzung nach Anspruch 1 hergestellt ist.

## Revendications

1. Composition de résine thermoplastique électro-conductrice, comprenant :
80 à 99,7 parties en poids d'une résine thermoplastique, la résine thermoplastique étant choisie dans le groupe consistant en une résine de polyamide, une résine de polyester, une résine de polycarbonate et une combinaison de celles-ci ;
0,1 à 5 parties en poids d'un nanotube de carbone ;
0,1 à 5 parties en poids d'un modifiant choc,
dans laquelle le modifiant choc est un polymère coeur-coque, et dans laquelle le polymère coeur-coque a une structure coeur-coque préparée par polymérisation par greffage d'un ou plusieurs monomères sur un coeur de caoutchouc, le monomère étant un composé insaturé choisi dans le groupe consistant en le styrène, l'α-méthylstyrène, le styrène à substitution halogéno ou alkyle en C₁-C₈, l'acrylonitrile, le méthacrylonitrile, les esters alkyliques en C₁-C₈ de l'acide méthacrylique, les esters alkyliques en C₁-C₈ de l'acide acrylique, l'anhydride maléique, le maléimide substitué sur l'azote par un ou des substituants alkyle en C₁-C₄ ou phényle, ou une combinaison de ceux-ci, et le coeur de caoutchouc est polymérisé avec un ou plusieurs monomères choisis dans le groupe consistant en les diènes en C₄-C₆, les acrylates et les combinaisons de ceux-ci ; et
0,1 à 10 parties en poids d'un additif polymère hydrophobe, pour un total de 100 parties en poids de la composition de résine thermoplastique électro-conductrice, l'additif polymère hydrophobe étant choisi dans le groupe consistant en une résine de polyoléfine fluorée, une polyoléfine ayant une masse moléculaire moyenne en nombre de 1000 à 50 000 g/mole, polymérisée avec un ou plusieurs monomères choisis parmi l'éthylène, le propylène, l'isopropylène, le butylène, l'isobutylène et une combinaison de ceux-ci, et une combinaison de celles-ci.

2. Composition de résine thermoplastique électro-conductrice selon la revendication 1, dans laquelle le nanotube de carbone a un diamètre de 0,5 à 100 nm et une longueur de 0,01 à 100 µm.

3. Composition de résine thermoplastique électro-conductrice selon la revendication 2, dans laquelle le caoutchouc acrylate est polymérisé avec des acrylates monomères choisis dans le groupe consistant en l'acrylate de méthyle, l'acrylate d'éthyle, l'acrylate de n-propyle, l'acrylate de n-butyle, l'acrylate de 2-éthylhexyle, le méthacrylate d'hexyle, le méthacrylate de 2-éthylhexyle et les combinaisons de ceux-ci.

4. Composition de résine thermoplastique électro-conductrice selon la revendication 1, dans laquelle la résine de polyoléfine fluorée est choisie dans le groupe consistant en le polytétrafluoréthylène, le poly(fluorure de vinylidène), un copolymère tétrafluoréthylène/fluorure de vinylidène, un copolymère tétrafluoréthylène/hexafluoropropylène, un copolymère éthylène/tétrafluoréthylène, et les combinaisons de ceux-ci.

5. Composition de résine thermoplastique électro-conductrice selon la revendication 1, dans laquelle la polyoléfine ayant une masse moléculaire moyenne en nombre de 1000 à 50 000 g/mole est au moins un copolymère d'oléfine choisi parmi l'éthylène, le propylène, l'isopropylène, le butylène, l'isobutylène et les combinaisons de ceux-ci.

6. Composition de résine thermoplastique électro-conductrice selon la revendication 1, comprenant en outre un ou plusieurs additifs choisis parmi une fibre de verre, une fibre de carbone, le talc, la silice, le mica, l'alumine, un stabilisant UV, un thermostabilisant, un antioxydant, un retardateur de flamme, un lubrifiant, un pigment et un colorant.

7. Objet plastique fabriqué à partir de la composition de résine thermoplastique électro-conductrice selon la revendication 1.
